# EUROPEAN PATENT SPECIFICATION

(11) **EP 1 846 830 B1**
(45) Date of publication and mention of the grant of the patent: **08.07.2020**
(21) Application number: 05854862.9
(22) Date of filing: 20.12.2005
(51) Int. Cl.: G06F 12/14, G06F 21/34

(54) **ACCESS KEYS**
ZUGANGSSCHLÜSSEL
CLÉS D'ACCÈS

(30) Priority: 20.12.2004 US 637536 P; 24.01.2005 US 646463 P; 06.04.2005 US 100803; 14.04.2005 US 106930; 17.05.2005 US 131652; 20.05.2005 US 134123; 25.05.2005 US 136851; 25.05.2005 US 137886; 26.05.2005 US 139167; 31.05.2005 US 140810
(43) Date of publication of application: 24.10.2007
(73) Proprietor: Biogy, Inc., San Francisco, CA 94118 (US)
(72) Inventor: FISKE, Michael, San Francisco, California 94147 (US)
(74) Representative: Hellmich, Wolfgang
(86) International application number: PCT/US2005/046215
(87) International publication number: WO 2006/069082

(56) References cited:
- WO-A1-01/44899
- WO-A2-03/093923
- US-A1- 2002 067 832
- US-A1- 2004 123 113
- US-A1- 2004 238 918
- MENEZES A ET AL: "Handbook of Applied Cryptography , IDENTIFICATION AND ENTITY AUTHENTICATION" 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP002262234 ISBN: 9780849385230 * section 10.2; page 388 - page 397 * * page 396 *

## Description

### FIELD

The specification generally relates to a security access system.

### BACKGROUND

In typical cryptographic systems, one or more encryption keys are created on the sender's computer or device and are used to transmit an encrypted message to another computer or device. The receiver also has one or more encryption keys to decrypt the message. Typical encryption keys have a length of 128 bits, 256 bits, 512 bits, or larger. Since most people are incapable of remembering an encryption key this long, these encryption keys are stored on a computer or other device that often requires a shorter, less secure, password to access. This creates a situation, where the password is often much easier to obtain than the encryption keys. Furthermore, many operating systems have many security flaws, so often a sophisticated intruder does not have to obtain the password. The intruder can gain access to the computer containing the encryption keys, and the cryptographic system's security is compromised. A discussion of prior authentication methods can be found in MENEZES A ET AL: "Handbook of Applied Cryptography , IDENTIFICATION AND ENTITY AUTHENTICATION" 1 January 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , XP002262234, ISBN: 9780849385230.

It is possible to scan fingerprints into computers, rather than enter a password, to access computers. However, such systems are insecure, because the fingerprints, or derived fingerprint information, can be captured by an intruder. Consequently, the security of the whole system is compromised. Some examples of prior art systems are WO 01/44899 A1 (KRYPTON SOFTWARE LTD [CA]), WO 03/093923 A2 (ERYOU ROBERT; NAJM CLOVIS [CA]) 13 November 2003, US 2004/123113 A1 (MATHIASSEN SVEIN [NO]E T AL) 24 June 2004 (2004-06-24), WO 0144899 A1 21-06-2001, EP 1506469 A2 16-02-2005, and US 2004123113 A1 24-06-2004, and US 2009010503 A1 08-01-2009.

### BRIEF DESCRIPTION OF THE DRAWINGS

In the following drawings like reference numbers are used to refer to like elements. Although the following figures depict various examples of the invention, the invention is not limited to the examples depicted in the figures.
FIG. 1 shows a block diagram of a system for encrypting and decrypting items.
FIG. 2 shows a block diagram of an example of an unsecured system, which may be used in the system of FIG. 1.
FIG. 3 shows a block diagram of an example of the memory of FIG. 2.
FIG. 4 shows an example of an embodiment of a secure system.
FIG. 5 shows an example of a secure module.
FIG. 6 shows an example of a secure module.
FIG. 7 shows an example of a secure module.
FIG. 8 shows a flowchart of an example of a method for assembling a. secure module.
FIG. 9 shows a flowchart of an example of a method of setting up the system of FIG. 1.
FIG. 10 shows a flowchart of an example of a method for encrypting or decrypting data.

### DETAILED DESCRIPTION

Although various embodiments of the invention may have been motivated by various deficiencies with the prior art, which may be discussed or alluded to in one or more places in the specification, the embodiments of the invention do not necessarily address any of these deficiencies. In other words, different embodiments of the invention may address different deficiencies that may be discussed in the specification. Some embodiments may only partially address some deficiencies that may be discussed in the specification, and some embodiments may not address any of these deficiencies.

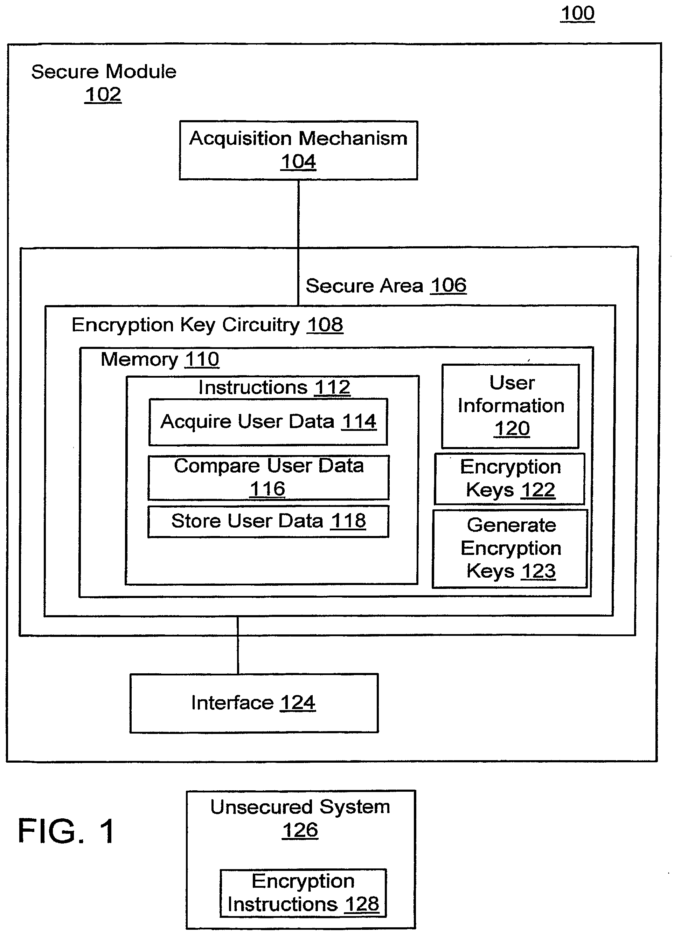

In general, at the beginning of the discussion of each of FIGs. 1-7 is a brief description of each element, which may have no more than the name of each of the elements in the one of FIGs. 1-7 that is being discussed. After the brief description of each element, each element is further discussed. In some of FIGs. 1-7 the further discussion of each element is usually in the numerical order of the elements. In some of FIGs. 1-7 the further discussion of each element discusses a group of the elements together. In some of FIGs. 1-7 after the further discussion of each element, there is a discussion of how all the elements cooperate with one another. In general, each of FIGs. 1-10 is discussed in numerical order, and the elements within FIGs. 1-10 are also usually discussed in numerical order to facilitate easily locating the discussion of a particular element. Nonetheless, there is no one location where all of the information of any element of FIGs. 1-10 is necessarily located. Unique information about any particular element or any other aspect of any of FIGs. 1-10 may be found in, or implied by, any part of the specification.

FIG. 1 shows a block diagram of system 100 for encrypting and decrypting items. System 100 includes a secure module 102 and acquisition mechanism 104, which includes secure area 106. Secure area 106 may include encryption key circuitry 108 having memory 110. Memory 110 may include instructions 112, which may include instructions for acquire user data 114, compare user data 116, and store user data 118. Memory 110 may also include user information 120 and encryption key 122. Instructions 112 may also include generate encryption keys 123. Secure module may also include interface 124. System 100 may also include unsecured system 126, which runs encryption instructions 128. In other embodiments system 100 may not have all of the components listed above or may have other components instead of and/or in addition to those listed above.

Secure module 102 may include any of a number of systems. In an embodiment, secure module 102 is configured so that it is difficult to access the inner working of secure module 102. In other words, secure module 102 may be configured so that it is difficult to examine and/or alter the contents of any memory within secure module 102 and/or to send commands to secure module 102.

Acquisition mechanism 104 may be a sensor, and may enable secure module 102 to acquire (e.g., scan in or receive) user data, such as fingerprints, other biometric data, or other user data. For example, if acquisition mechanism 104 includes a fingerprint sensor, acquisition mechanism 104 may include an area sensor or a sweep sensor.

Secure area 106 is a region within secure module 102 within which various security measures have been implemented. For example, the security of the secure area 106 may be enhanced by any one of, any combination or of, or all of (1) the use of embedded software, (2) the lack of an operating system, and (3) the secure area being at least part of a self-contained device separate from unsecured system 126. For example, the unit that includes the secure area 106 (e.g., secure module 102) may contain its own processor.

Encryption key circuitry 108 generates encryption keys and may have other functions. Encryption key circuitry 108 may include circuitry configured for generating encryption keys or may include a processor configured (e.g., programmed) for generating encryption keys. Encryption key circuitry 108 may include a combination of a processor and specialized circuitry configured for performing a particular method or computation. Encryption key circuitry 108 may communicate with acquisition mechanism 104 and with a host computer. Although not necessary, in some embodiments, acquisition mechanism 104 and encryption key circuitry 108 could be integrated into a single chip. Alternatively, acquisition mechanism 104 and encryption key circuitry 108 may be in two separate chips. Throughout this specification encryption key circuitry 108 may be replaced with access key circuitry to obtain different embodiments.

Memory 110 may be incorporated within encryption key circuitry 108 and may include volatile and nonvolatile memory. The use of non-volatile memory enables the secure module 102 to permanently store user information, executable code, and/or encryption keys. In some embodiments, the memory 110 is on (e.g., "onboard") encryption key circuitry 108. Memory 110 may include embedded instructions that are executed by encryption key circuitry 108.

Instructions 112 are stored on memory 110, and may include embedded instructions executed by encryption key circuitry 108. Instructions 112 may be capable of generating passcodes (e.g., a password) based on user data. In this specification the word passcode is generic to the word password in that a passcode can be any code. Through out this specification, the word passcode may be replaced by the word password to obtain a specific embodiment. The passcodes may be caused to be sent to an unsecured device and/or to be used to authenticate a passcode received from an unsecured device. Instructions 112 may be capable of generating encryption keys based on user data and/or passcodes based on encryption keys. Instructions 112 may also be capable of authenticating a set of newly acquired user data (e.g., fingerprints) by comparing the newly acquired user data with stored user information (e.g. stored characteristics of fingerprints).

Acquire user data 114 may include instructions for acquiring a fingerprint and/or other user data from acquisition mechanism 104. Compare user data 116 may include instructions for comparing and/or matching acquired user data with stored user information. Store user information 118 may include instructions for storing user information acquired by acquire user data 112 from acquisition mechanism 104.

User information 120 may be the user data acquired by acquire user data 114. Alternatively, user information 120 may include information derived from the user data acquired using acquire user data 114. For example, if acquisition mechanism 104 acquires fingerprints, user information may include information characterizing the fingerprints instead of, or in addition to, the actual fingerprints. User information 120 may be, or may be based upon, many other types of user data in addition to, or instead of, fingerprints. For example, user information 120 may include a name, a birthday, a favorite number, a social security number, a driver's license, a profile, an image of a face, an iris scan, a toe print, a handprint, and/or a footprint. In an embodiment, the item used to generate the passcodes is any item that is unique. In an embodiment, the item used to generate the passcode is one that is difficult to fabricate, guess, find by trial and error, and/or compute. In an embodiment, the item used to generate the passcodes is uniquely associated with the user. In an embodiment, the item used to generate the passcodes has an unpredictable element to it (e.g., the unpredictable manner in which the patterns of lines in fingerprints differ between fingerprints).

As explained in US Patent Applications S.N. 11/100,803, S.N. 11/102,407, S.N. 11/104,343, S.N. 11/104,357, and S.N. 11/106,183, and S.N. 11/106,930, any sequence of bits (which may represent any string of symbols) may be used as a passcode. In some cases, the passcode may be directly transmitted to another system without human intervention, and therefore the sequence of bits may not have a visual display in standard formats such as ASCII, Unicode, and so on. For example, the first sequence of 8 bits in the passcode could, in ASCII, represent the end of file character, which currently does not have a visual representation. In other embodiments where the passcode is displayed as a sequence of symbols on a graphical display, the symbols may be chosen from any subset of, or combination of, alphanumeric symbols, punctuation symbols, picture symbols, math symbols, upper case symbols, and/or lower case symbols, for example. The choice of alphanumeric symbols may include characters from a multiplicity of languages. An example of an alphanumeric passcode with 8 symbols 4R1pa5Wx. An example of a possible passcode with 8 symbols is ♀3 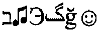 . An example with 16 symbols including punctuation and other symbols is &x#W 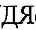 q61!j$uS_m.

Encryption keys 122 may include one or more encryption keys, which are codes (sequences of bits or symbols) that are used for generating passcodes. Encryption keys 122 may be used by an encryption algorithm to encrypt and/or decrypt data. In this specification, encryption keys 122 may also be represented by the symbol K_{d}. Encryption keys 122 may be stored on secure module 102. Encryption keys 122 may be stored in the internal memory (e.g., memory 110) of encryption key circuitry 108. One or more fingerprint images and/or other user data may be used to determine values for encryption keys 122. Using user information 120 to create encryption keys 122 helps ensure that the encryption key of each user is unique. Encryption keys 122 may be used as seed values for an encryption method that is implemented on an unsecured system. In another embodiment, encryption keys 122 are not used as seed values, but are just an access code, which may be referred to as an access key, for a method or other entity associated with the unsecured system.

Encryption keys 122 may be used as the registration code and/or the passcode generator of US Patent Applications S.N. 11/100,803, S.N. 11/102,407, S.N. 11/104,343, S.N. 11/104,357, S.N. 11/106,183, and S.N. 11/106,930. Thus, similar to the passcode, any sequence of bits or sequence of symbols may be used as one of encryption keys 122. In some cases, encryption keys 122 may be directly transmitted without human intervention, and consequently the sequence of bits may not have a visual display in standard formats such as ASCII, Unicode, and so on. For example, the first sequence of 8 bits in one of encryption keys 122 could, in ASCII, represent the end of file character, which currently does not have a visual representation. In other embodiments where the encryption keys 122 are displayed as a sequence of symbols on a graphical display, the symbols may be chosen from any subset of or combination of alphanumeric symbols, punctuation symbols, picture symbols, math symbols, upper case symbols, and/or lower case symbols, for example. The choice of alphanumeric symbols may include characters from a multiplicity of languages. An example of an encryption key with 16 symbols is 1Ae58GnZbk3T4pcQ, and an encryption key with punctuation and other symbols may also be used. An example with 32 symbols is 1!56hs#K♀3_4xP^{∗}7:y2iW=K;r.+4vN?. There may be at least one encryption key for each user, secure module 102, and/or unsecured system 126. The same criterion and/or restrictions may be used for both passcodes and encryption keys 122 for determining what sequences of characters are valid. Throughout this specification encryption keys may be replaced with access keys to obtain different embodiments. Each of encryption keys 122 may have different parts stored in different locations within memory 110.

Generate encryption keys 123 is a method for generating encryption keys 122 using user information 120. Although in FIG. 1 generate encryption keys 123 is depicted as separate from instruction 112, generate encryption keys 123 may be included within instructions 112. Generate encryption keys 123 may implement a method that uses user information 120 as a seed for generating encryption keys 123.

Generate encryption keys 123 may be a "one-way" method, which is a method for which finding an inverse or for which finding the input based on the output is expected to be difficult or intractable. Throughout this specification generate encryption keys 123 may be replaced with instructions for generating access keys to obtain a different embodiment. Stated differently, a one-way method Φ has the property that given an output value z, it is not possible or computationally extremely difficult to find an input (e.g., message) m_{z} such that Φ(m_{Z}) = z. For some one-way functions, it could take over 10³⁰ years of computer processor execution time to compute Φ⁻¹(z). In other words, a one-way method Φ is a method that can be easily computed, but that has an inverse Φ⁻¹ that is extremely difficult (e.g., impossible) to compute. One manner of quantifying the difficulty of finding m_{z} (given an output z) is to use the number of computations that are expected to be required to compute and/or guess m_{z}. For one type of method, it is expected to take between O(2^{n/2}) and O(2ⁿ) (e.g. between 2^{n/2} and 2ⁿ) computational steps to find or guess m_{z}, (depending on the how clever the one performing the computations is), where n is the number of bits in the output z. The method Φ (which may be referred to as a generating method) may be a one-way algorithm, a one-way function, and/or another one-way method. By using a one-way method for computing encryption keys 122, even if one of encryption keys 122 is intercepted, stolen, or otherwise obtained, it is unlikely that the encryption key can be used to discover user information 120 or (if user information 120 was derived from user data) used to discover the user data from which user information 120 was derived.

One set of methods that may be used are one-way methods in which finding the inverse involves an operation that is mathematically indeterminate, impossible, intractable, computationally impractical, or computationally difficult. For example, one method is to use a collection of step functions each of whose domain and range is [0, 1, 2, ... 255] and apply a distinct one of the step functions to a part of user information 120. User information 120 could be used to determine which step functions to select from the collection. If 16 step functions are chosen from the collection, then this would create an output having 128 bits. If n step functions are chosen from the collection, then this would create an output of 8n bits. An alternative to selecting the step function would be to construct 32 matrices resulting from the step functions and compute the determinant modulo 256 for each of the 32 matrices. This creates a one-way method whose output is 256 bits.

As another example, one-way method Φ could involve first representing user information 120 by a string of digits. Then, each digit of the string of digits could be multiplied by a corresponding digit from another string of digits, where at least one digit of the other string has a value of zero. The inverse of this method would involve at least one division by zero for each multiplication by a digit with the value of zero, which has no inverse, and consequently this method would also be one-way. Similarly, functions for which finding their inverses involves computing a non-convergent series or non-convergent integral are other examples of classes of functions that may be used as one-way methods.

Another class of one-way methods involves computations that cause a loss of information or a discarding of selected pieces of information. Since some of the input information is lost in computing this class of one-way methods, the original input information (e.g., user information 120) is difficult and may be impossible to recover. For example, a one-way method may be constructed by first performing a randomizing operation such as discarding random bits of information from the input, adding random bits of information to the input, and/or performing another randomizing operation to the input, and then another method (e.g., function) may be applied to the information retained. Similarly, the same randomizing operations may be performed on the output of the one-way method.

In an embodiment, generate encryption key 123 includes a hash function. A "hash function," denoted Φ, is a function that accepts as its input argument an arbitrarily long string of bits (or bytes) and produces a fixed-size output. In other words, a hash function maps a variable length input m to a fixed-sized output, Φ(m). Typical output sizes range from 128 to 512 bits, but can also be larger or smaller. An ideal hash function is a function Φ whose output is "uniformly distributed." In other words, suppose the output size of Φ is n bits. If the message m is chosen randomly, then for each of the 2ⁿ possible outputs for z, the probability that Φ(m) = z is 2⁻ⁿ. In an embodiment, the hash functions used in generate encryption key 123 are one-way.

In contrast to an ideal hash function, if the input m is chosen randomly, then for each of the 2ⁿ possible outputs for z, the probability that Φ(m) = z is a value P, which is compared to 2⁻ⁿ. In an embodiment, the hash function is designed so that P is relatively close to 2⁻ⁿ. How close P is to 2⁻ⁿ is a measure of the quality of the hash function. The chi-square function on n-1 degrees of freedom is a useful way to measure the quality of a real hash function. One uses a chi-square on n-1 degrees, because there are n bits of output. A confidence level that the real hash function is close to an ideal hash function (or has a certain quality) can be computed based on the chi-square function. Some typical confidence levels could be at least 90%, at least 95%, at least 99%, at least 99.5%, at least 99.999%, or greater depending on the level of security desired. In an embodiment, these confidence levels may represent a confidence that at least 2^{n/100} to 2ⁿ computations are required to find the inverse of the hash function. In another embodiment, the above confidence levels represent a confidence that at least 2^{n/2} to 2ⁿ computations are required to find the inverse of the hash function. In an embodiment, these confidence levels may represent a confidence that at least 2^{log(n)} to 2ⁿ computations are required to find the inverse of the hash function. In an embodiment, these confidence levels may represent a confidence that at least .9(2ⁿ) to 2" computations are required to find the inverse of the hash function. In an embodiment, the hash functions that are used are one-way. Other types of one-way functions or methods may be used in place of a hash function.

Any of a number of hash functions may be used for one-way method Φ. One possible hash function is SHA-256, designed by the National Security Agency and standardized by the NIST. The output size of SHA-256 is 256 bits. Other examples of alternative hash functions are of those that are of the type that conforms to the standard SHA-1, which produces output values of 128 bits, and SHA-512, which produces output values of 512 bits.

There are different methods that may be used for hashing user information 120, such as fingerprints. Different types of methods of hashing user information 120 are appropriate for different sizes of encryption keys, and different types of user information 120 that may be passed to the hash function. One method is to take two different pieces of user information 120 (e.g., two fingerprints) and apply the hash function SHA-256 to each piece of user information 120. For ease of explanation, denote the hash function SHA-256 as Φ₁, Each application of Φ₁ to user information 120 produces an output value of 256 bits. With two pieces of user information 120, (e.g., two fingerprints), these bits are concatenated together to create a 512-bit encryption key, called K_{d}. Another method is to use two different sections S and T of a single acquired set of pieces of user data (e.g., two section of one fingerprint), and produce a 512-bit encryption key, K_{d}, by concatenating Φ₁(S) and Φ₁(T). An enhancement of this method can be used to create encryption keys larger than 512-bits. Divide one acquired piece of user information 120 (e.g., one fingerprint) into n sections: S₁, S₂, ..., Sₙ. Then concatenate the bits Φ₁(S₁), Φ₁(S₂), ..., Φ₁(Sₙ). This creates an encryption key K_{d} that is 256n bits in length. For example, if user information 120 is divided into 10 sections, then this method would create an encryption key with 2,560 bits.

Another embodiment is to use two different parts of user information, denoted S₁ and S₂, apply a one-way function Φ to each part of the finger print information to form fingerprint information that has the same length as each of the parts. For example, let the symbol⊕denote the exclusive-or function i.e. as a binary operator on bits 0⊕0 = 1⊕1 = 0 and 1⊕0 = 0⊕1 = 1. ⊕ is extended coordinate-wise to strings of bits; as an example, if A = 0011 and B = 0101, then A⊕B = 0110. In an embodiment, a one-way function Φ is applied to each part and then take an exclusive-or, Φ, of the two results. In other words, the encryption key is K_{d} = Φ(S₁)⊕Φ(S₂). If Φ has an output size of m bits, then K_{d} has a size of m bits. A similar process could be performed using other operators in place of an exclusive-or to create an encryption key K_{d} having a size of m bits.

Similarly, to create a larger key, start with 2n pieces of user information, S₁, S₂, ..., S₂ₙ. Create n different m-bit keys, k₁, k₂, ... kₙ where k₁ = Φ(S₁)⊕Φ(S₂), k₂=Φ(S₃)⊕Φ(S₄), k₃=Φ(S₄)⊕Φ(S₅), ... , kₙ=Φ(S₂ₙ₋₁) ⊕Φ(S₂ₙ). Then create the key K_{d} by concatenating these n keys; in other words, K_{d} = k₁k₂k₃ ... kₙ. Thus, K_{d} has a size of mn bits, where the output of one-way function Φ is m bits. If Φ = Φ₁ (i.e. SHA-256), then K_{d} has a size of 256n bits. A similar process could be performed using other operators in place of an exclusive-or to create an encryption key K_{d} having a size of mn bits.

Hash functions are discussed in National Institute of Standards and Technology, Secure Hash Standard, April 17, 1995, FIPS PUB 180-1, [e.g., Page 88] and in National Institute of Standards and Technology, Secure Hash Standard, (draft) 2001, Draft FIPS PUB 180-2, [e.g., Page 89]. Hash functions are also discussed in US Patent Applications S.N. 11/100,803, S.N. 11/102,407, S.N. 11/104,343, S.N. 11/104,357, and S.N. 11/106,183, and S.N. 11/106,930.

Although instructions 112, user information 120, encryption key 122 and generate encryption keys 123 are depicted as contiguous blocks within memory 110, they may be stored in locations that are interdispersed amongst each other. Similarly, although instructions for acquire user data 114, compare user data 116, and store user data 118 are depicted as separate blocks within instructions 112, they may be stored in locations that are inter-dispersed amongst each other. Also, although instructions for acquire user data 114, compare user data 116, store user data 118, and generate encryption keys 123 are depicted at contiguous blocks, they may be lines of codes that are inter-dispersed amongst one another, and may not be separate program units.

Interface 124 is used to communicate with unsecured system 126. Interface system 124 may be any one of and/or any combination of a USB port, an RS 232 connection, a wireless connection (e.g., using RFID), a serial port, and/or any of a number of other types of connections.

Unsecured system 126 may be a host computer, encryption device, or other machine that is used for encrypting data. The word "host" refers to a laptop, desktop, other type of computer, or possibly another electronic device. Unsecured system 126 may be a single module or a large system having many components. Unsecured system 126 is referred to as "unsecured" only because, in an embodiment, no steps are necessarily taken to secure unsecured system 126. However, unsecured system 126 may have been secured, and may have any combination of security safeguards protecting it. For example, unsecured system 126 may require entry of a passcode and/or any type of user data (e.g., any of the user data upon which user information 120 may be based) prior to entry. Alternatively, unsecured system 126 may have no security features.

Encryption instructions 128 may be executed by unsecured system 126, and may be instructions that perform encryption. Encryption instructions 128 may require receipt of one of encryption keys 122 to perform the encryption. Encryption instructions 128 may generate a passcode based on encryption keys 122. Alternatively, unsecured system 128 may receive the new passcode from secure module 102 in response to providing the prior passcode that was stored on unsecured system 126. Through out this specification, other embodiments may be obtained by replacing encryption instructions 128 with instructions to perform a task, and replace any discussion of encryption instruction 128 performing encryption or decryption with the instructions performing that task.

As an example of one embodiment, secure module 102 is a USB internal device, which is a secure device having at least a USB connection for interface 124, internal memory for memory 110, fingerprint sensor for acquisition mechanism 104, and a processor for encryption key circuitry 108. In an embodiment, this device does not run an operating system. All fingerprint data or user information 120 is acquired and stored on the USB internal device.

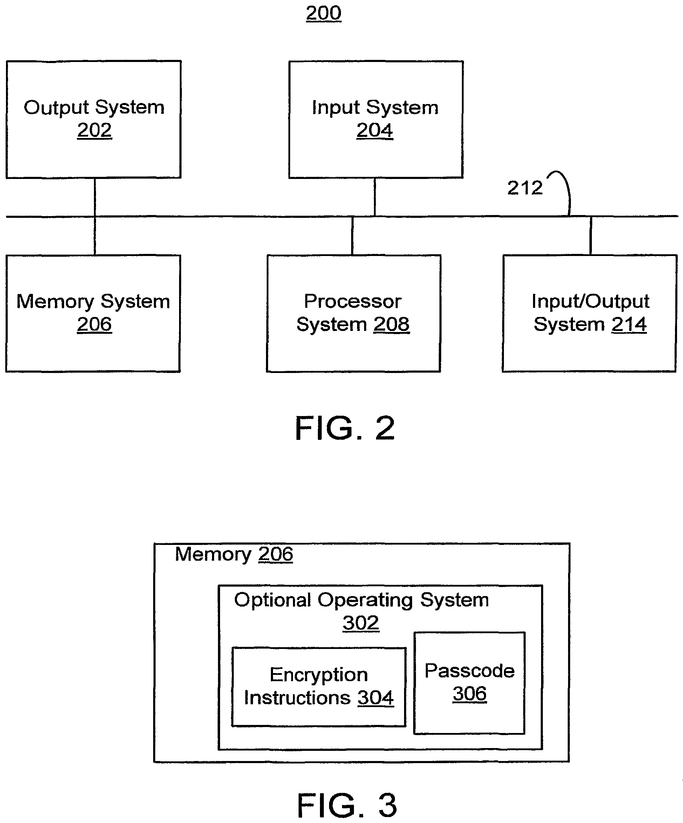

FIG. 2 shows a block diagram of an example of an unsecured system 200, which may be used in system 100. Unsecured system 200 may include output system 202, input system 204, memory system 206, processor system 208, communications system 202, and input/output device 214. In other embodiments, unsecured system 200 may not include all of the components listed above or include other components in addition to, and/or instead of, those listed above.

Output system 202 may include any one of, some of, any combination of, or all of a monitor system, a handheld display system, a printer system, a speaker system, a connection or interface system to a sound system, an interface system to peripheral devices and/or a connection and/or interface system to a computer system, an intranet, and/or an internet, for example.

Input system 204 may include any one of, some of, any combination of, or all of a keyboard system (e.g., an encryption keyboard), a mouse system, a track ball system, a track pad system, buttons on a handheld system, a scanner system, a microphone system, a connection to a sound system, and/or a connection and/or interface system to a computer system, intranet, and/or internet (e.g., IrDA, USB), for example.

Memory system 206 may include, for example, any one of, some of, any combination of, or all of a long term storage system, such as a hard drive; a short term storage system, such as random access memory; a removable storage system, such as a floppy drive, jump drive or other removable drive; and/or flash memory. Memory system 206 may include one or more machine-readable mediums that may store a variety of different types of information.

The term machine-readable medium is used to refer to any medium capable carrying information that is readable by a machine. One example of a machine-readable medium is a computer-readable medium. Another example of a machine-readable medium is paper having holes that are detected and trigger different mechanical, electrical, and/or logic responses. For example, embedded software is stored on a machine-readable medium. The term machine-readable medium also includes mediums that carry information while the information is in transit from one location to another, such as copper wire, air, water, and/or optical fiber. Software versions of any of the components of FIGs. 1-7 may be stored on machine-readable mediums.

Processor system 208 may include any one of, some of, any combination of, or all of multiple parallel processors, a single processor, a system of processors having one or more central processors, and/or one or more specialized processors dedicated to specific tasks.

Communications system 212 communicatively links output system 202, input system 204, memory system 206, processor system 208, and/or input/output system 214 to each other. Communications system 212 may include machine-readable media such as any one of, some of, any combination of, or all of electrical cables, fiber optic cables, long term and/or short term storage (e.g., for sharing data) and/or means of sending signals through air (e.g., wireless communications), for example. Some examples of means of sending signals through air include systems for transmitting electromagnetic waves such as infrared and/or radio waves and/or systems for sending sound waves.

Input/output system 214 may include devices that have the dual function as input and output devices. For example, input/output system 214 may include one or more touch sensitive display screens, which display an image and therefore are an output device and accept input when the screens are pressed by a finger or stylus, for example. The touch sensitive screens may be sensitive to heat and/or pressure. One or more of the input/output devices may be sensitive to a voltage or current produced by a stylus, for example. Input/output system 214 is optional, and may be used in addition to or in place of output system 202 and/or input device 204.

FIG. 3 shows a block diagram of an example of memory 206. Memory 206 may include optional operating system 302, encryption instructions 304, and passcode 306. In other embodiments system memory 206 may not have all of the components listed above or may have other components instead of and/or in addition to those listed above.

Memory 206 may contain optional operating system 302. Some examples of optional operating system 302 are Linux, Unix, Windows, and DOS. However, any other operating system may be used instead, including specialized operating systems such as for cell phones, video game players, other hand held devices, or any other operating system.

Encryption instructions 304 may cause unsecured system 200 to encrypt and/or decrypt items. Encryption instructions 304 may be an embodiment of encryption instructions 128. In an embodiment, encryption instructions 304 will only perform encryption and/or decryption if requested by secure module 102 and/or if secure module sends one of encryption keys 122, thereby granting permission for the encryption to take place.

Passcode 306 is stored by unsecured system 200 and is used to authenticate a request for encoding and/or decoding an item. In an embodiment, passcode 306 is generated by secure module 102, sent to unsecured system 126, and then stored at unsecured system 126 for authentication of a later request for encrypting and/or decrypting data. When it is desired to encrypt or decrypt data, passcode 306 is sent back to secure module 102, and secure module 102 determines whether passcode 306 was the passcode supplied earlier. If passcode 306 is the earlier supplied passcode, secure module 102 sends one of encryption keys 122, which encryption instructions 304 use to encrypt the desired data. In another embodiment, passcode 306 is not used at all.

In still another embodiment, the key K_{d} is encrypted before it is sent from secure module 102 to unsecured system 126. In some encryption schemes, passcode 306 may be used as an encryption key to encrypt key K_{d}. For example, if passcode 306 is 256 bits, then AES 256 bit encryption could use passcode 306 as the key and encrypt key K_{d}, denoted as E(K_{d}). Then E(K_{d}) is transmitted to unsecured system 126, where the unsecured system 126 executes a AES 256 bit decryption code, and its copy of passcode 306 to decrypt E(K_{d}) so that the unsecured system 126 has possession of key K_{d}. Other encryption methods may also be used to securely transmit K_{d} from secure module 102 to unsecured system 126, such as DES, Blowfish, or RSA.

Throughout this specification, other embodiments may be obtained by replacing encryption instructions 304 with instructions to perform a task, and replace any discussion of encryption instruction 304 performing encryption or decryption with the instructions performing that task.

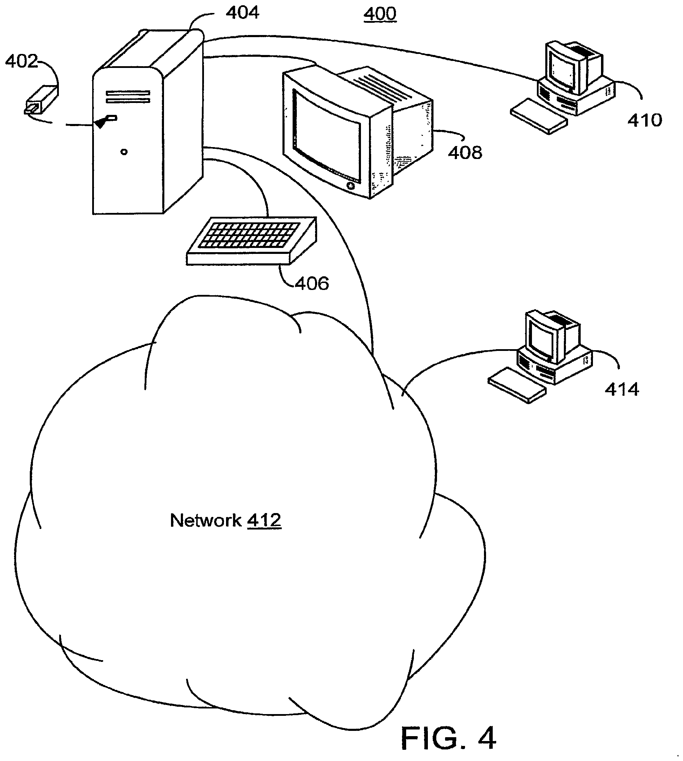

FIG. 4 shows an example of an embodiment of a secure system 400. Secure system 400 includes secure module 402, computer 404 having input system 406 and output system 408. Secure system 400 also includes system 410, network 412, and system 414. In other embodiments secure system 400 may not have all of the components listed above or may have other components instead of and/or in addition to those listed above.

Secure system 400 illustrates some of the variations of the manners of implementing system 100. Secure module 402 is one embodiment of secure module 102. Secure module 402 is capable of being plugged into and communicating with computer 404 or with other systems via computer 404. Secure module 402 may communicate wirelessly with computer 404 in addition to, or instead of, being capable of being plugged into computer 404. A user may use input system 406 and output system 408 to communicate with secure module 102.

Computer 404 is directly connected to system 410, and is connected, via network 412, to system 414. Network 412 may be any one or any combination of one or more Local Area Networks (LANs), Wide Area Networks (WANs), wireless networks, telephones networks, and/or other networks. Unsecured system 226 may be any of, a part of any of, or any combination of any of computer 404, system 410, network 412, and/or system 414. As an example, unsecured system 126 and encryption instructions 128 may be located on computer 404. As yet another example, unsecured system 126 and encryption instructions 128 may both be located on system 416 or may both be located on system 410.

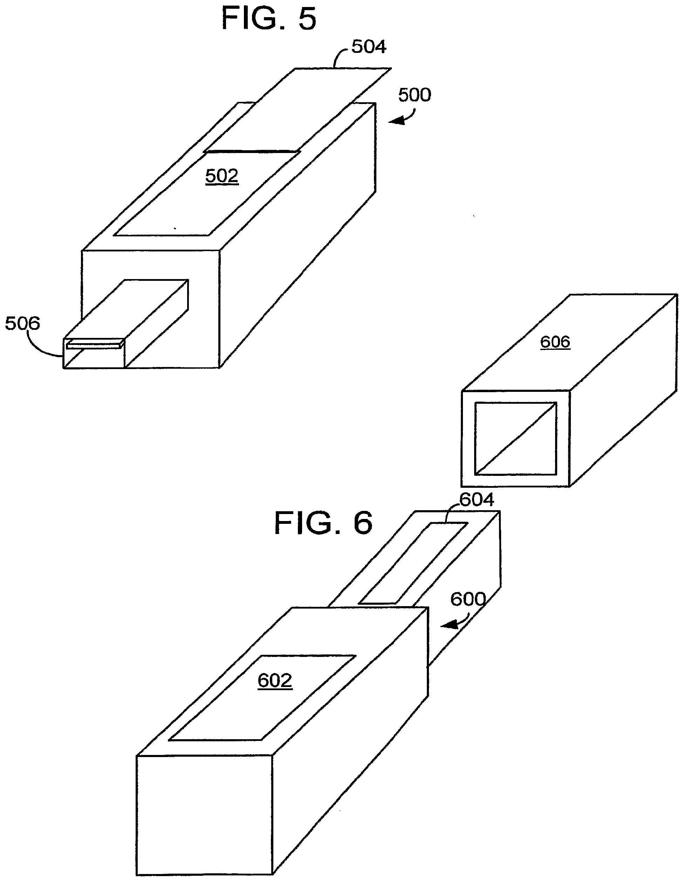

FIG. 5 shows one example of a secure module 500, which may include sensor 502, cover 504, and interface 506. In other embodiments, secure module 500 may not have all of the components listed above or may have other components instead of and/or in addition to those listed above.

Secure module 500 is an example of secure module 102 or 402. Sensor 502 may be a mechanism of acquiring fingerprints, and is an example of acquisition mechanism 104. Cover 504 may be a cover for covering sensor 502, and for protecting sensor 502 when sensor 502 is not in use. Cover 504 may swing open, slide open, and/or snap off and on. Interface 506 is an example of interface 124, and is for connecting with an electronic device, such as a computer. Interface 506 may be a USB port or may be replaced with an RS 232 connection, a wireless connection using RFID, a serial port or any of a number of other types of connections.

FIG. 6 shows an example of a secure module 600. Secure module 600 includes display 602, sensor 604, and cover 606. In other embodiments secure module 600 may not have all of the components listed above or may have other components instead of and/or in addition to those listed above.

Secure module 600 is an embodiment of secure module 102. Secure module 600 may be used instead of secure module 402 in FIG. 4. Display 602 displays passcodes and/or encryption keys, and is an example of interface 124. Display 602 is an interface with which the user interacts with secure module 102, and may be used for transferring the passcode or encryption key to unsecured system 126. Optionally, secure module 600 may also include a transmitter for transmitting the passcode or encryption key via radio waves, light pulses, and/or sound, for example, as part of interface 124. Sensor 604 is an example of acquisition mechanism 104, and maybe for acquiring fingerprints and/or images of other parts of the body of the user. The user may swipe her or his finger over sensor 604. In response, display 602 may display a passcode and/or encryption key that is only good for one use. The user reads the passcode or encryption key and causes the passcode and/or encryption key to be submitted to unsecured system 126. Cover 606 slides over the portion of secure module 600 having sensor 604 to protect sensor 604 from damage when not in use.

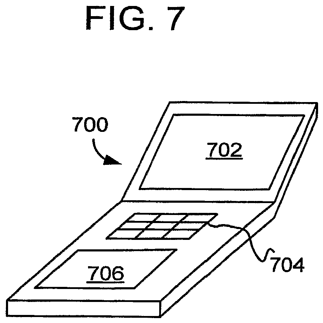

FIG. 7 shows an example of a secure module 700, which may include display 702, keypad 704, and sensor 706. In other embodiments secure module 700 may not have all of the components listed above or may have other components instead of and/or in addition to those listed above.

Secure module 700 is an example of secure module 102 (FIG. 1), which may be used instead of secure module 402 in FIG. 4. Display 702 is an example of interface 124, and may display passcodes, encryption keys, status information, instructions, replies to commands, for example. Optionally, secure module 700 may also include a transmitter for transmitting the passcode or encryption key via radio waves, light pulses, and/or sound, for example, as part of interface 124. Keypad 704 is for entering user information and commands, for example, and may be part of acquisition mechanism 104. Sensor 706 may be for acquiring fingerprints and/or images of other parts of the body of the user, and is also part of acquisition mechanism 104. Having both keypad 704 and sensor 706 allows secure module 700 to be configured to require that the user enter identifying information, such as social security number and birthday, in addition to the user data acquired via sensor 706.

Any one of, or any combination of, secure modules 600 and 700 maybe used in place of, or in addition to, secure module 402 within system 400, for example. Secure modules 402, 500, 600, and 700 are just a few examples of the many embodiments of secure module 102.

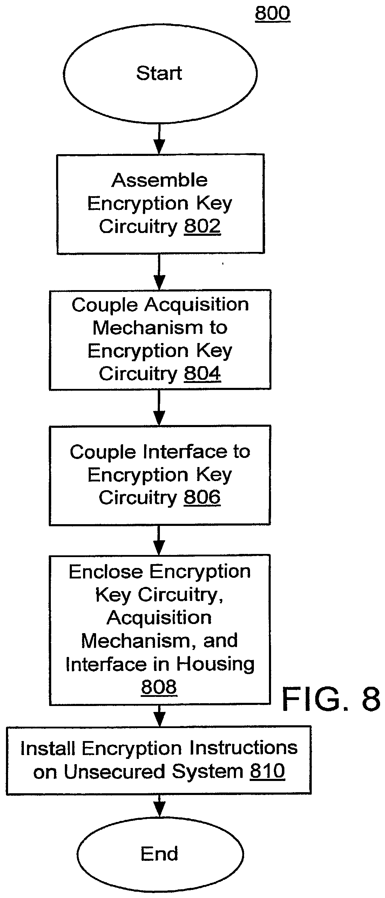

FIG. 8 is a flowchart of an example of a method 800 for assembling secure module 102. In step 802, secure area 106 (FIG. 1) is assembled, which may include installing memory 110 onto encryption key circuitry 108. In step 804, the acquisition mechanism 104 (FIG. 1) is coupled to the secure area 106. In step 806, interface 124 (FIG. 1) is coupled to secure area 106. In step 808, instructions 112 and/or other instructions are installed. In step 810, secure area 106, acquisition mechanism 104, and interface 124 are enclosed within a housing that is small enough to fit within a user's hand (e.g., shorter than a typical pen and no more than a two or three times wider than a typical pen). For example, the housing may be 2 to 6 inches long and less than a half inch in diameter. The secure module 102 may be of a size that is comparable to a thumb print. In other words, secure module 102 only need to be large enough to accept user information. In embodiments where the user information is fingerprints, the secure module 102 could be the size of a portion of a thumb large enough to capture a thumb print during a swipe, for example. In embodiments where acquisition mechanism 104 is a camera, secure module 102 does not need to be much larger than a small camera. In an embodiment, secure module 102 is less than 6 inches, less than 2 inches, less than an inch, or less than a centimeter in size.

In step 810, encryption instructions 128 are installed on unsecured system 126. Step 810 may be performed at any time with respect to step 802-808. In other embodiments method 800 may not have all of the steps listed above or may have other steps instead of and/or in addition to those listed above. Additionally, the steps of method 800 may be performed in other orders, may not be distinct steps, and/or many of the may be performed concurrently with one another. Additionally the steps of method 800 may not be distinct steps.

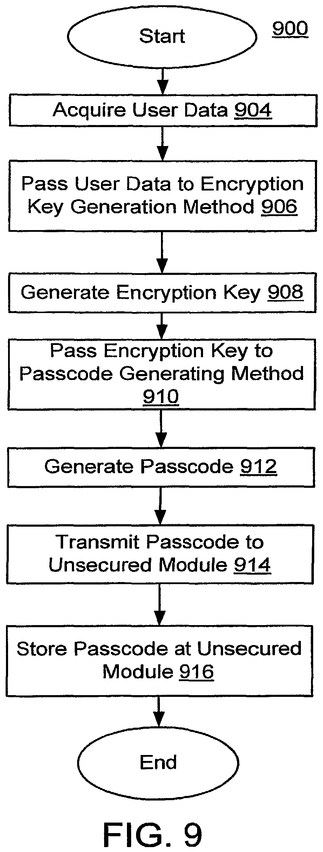

FIG. 9 shows a flowchart of an example of a method 900 of setting up system 100. During method 900 in step 904 user data is acquired. Acquiring user data may involve a user entering data and/or acquisition mechanism 104 sensing biometric information. Step 904 may also involve encryption key circuitry 108 executing acquire data 114 and store user data 118, thereby causing encryption key circuitry 108 to transfer the user data from acquisition mechanism 104 to memory 110 and store the user data at memory 110.

In step 906, the acquired user data is passed to, inside of the secure module 102, user data from a user of secure module 102 are passed to a one-way hash function or another type of one-way method of encoding user data. In step 908, generate encryption keys 123 is executed, and the one-way method generates an encryption key, K_{d}. In step 910, on secure module 102, the encryption key, K_{d} is passed to a one-way hash function or another type of one way method Φ. In step 912, the value P_{d}= Φ(K_{d}), a passcode, is computed on secure module 102 and subsequently, in step 914, passcode P_{d} is transmitted to unsecured system 126. In step 916, unsecured system 126 stores passcode P_{d}. If an intruder finds passcode P_{d} on unsecured system 126, the information obtained from passcode P_{d} is not helpful to the intruder, because the inverse of the encoding function, Φ⁻¹ is computationally difficult to compute.

Steps 902-914 may involve executing other instructions of instructions 112 in additions to, or instead of, those that appear in FIG. 1. Step 810 could be performed as part of method 900 instead of as part of method 800. Other embodiments may not include all of the above steps and/or may include other steps in addition to or instead of those listed in method 900. Additionally the steps listed in method 900 may not be distinct steps.

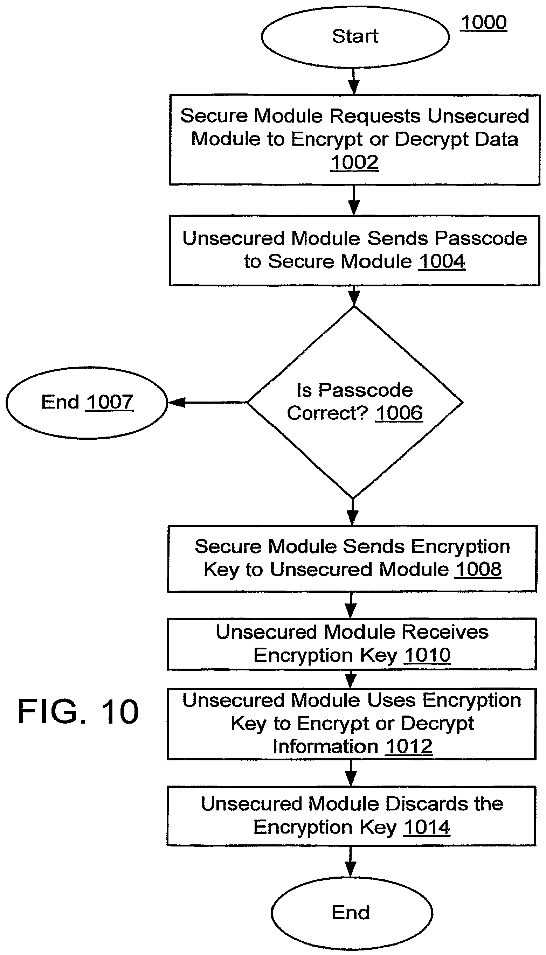

FIG. 10 shows a flowchart of an example of a method 1000 for encrypting or decrypting data. In step 1002, encryption key circuitry 108 makes a request to the unsecured system 126 to encrypt or decrypt some data. The request may be in response to a user entering user data (e.g., the user scanning a fingerprint into authentication mechanism 104), and the user data being authenticated. In step 1004, unsecured system 126 sends the passcode P_{d} to the secure module 102. In step 1006, secure module 102 authenticates the unsecured system 126, by checking whether passcode P_{d} is correct. If passcode P_{d} is not correct, then in step 1007 method 1000 is terminated. Consequently, encryption key K_{d} is not passed to unsecured system 126. The reason for not passing encryption key K_{d} is because it is expected that an intruder program is running and attempting to perform the encryption or decryption.

Returning to step 1006, if passcode P_{d} is correct, then in step 1008 secure module 102 retrieves encryption key K_{d} from memory 110 (e.g., flash memory) and transmits encryption key K_{d} to unsecured system 126. In another embodiment, step 1008 may involve encrypting encryption key K_{d} is before sending encryption key K_{d} from secure module 102 to unsecured system 126. For example, passcode 306 may be used as an encryption key to encrypt encryption key K_{d}. If passcode 306 is 256 bits, then AES 256 bit encryption could use passcode 306 as the encryption key and encrypt encryption key K_{d}. The encrypted encryption key may be denoted by E(K_{d}). Then the encrypted encryption E(K_{d}) is transmitted to unsecured system 126.

In step 1010, unsecured system 126 receives (e.g., accepts) encryption key K_{d}. Receiving encryption key K_{d}, may involve receiving encrypted encryption key E(K_{d}). Additionally, step 1010 may involve unsecured system 126 executing an AES 256 bit decryption code, using the copy of passcode 306 stored at unsecured system 126 to decrypt E(K_{d}) so that unsecured system 126 has possession of key K_{d}. Other encryption methods may also be used to securely transmit K_{d} from secure module 102 to unsecured system 126, such as DES, Blowfish, or RSA.

In step 1012, unsecured system 126 uses encryption key K_{d} to encrypt or decrypt the data. In step 1014, encryption key K_{d} is discarded. Encryption key K_{d} is not stored on unsecured system 126; encryption key K_{d} only remains in the volatile memory of unsecured system 126 for a brief period of time. Immediately, after the encryption or decryption process is finished making use of encryption key K_{d}, the volatile memory, which contains encryption key K_{d}, is erased. Encryption key K_{d} may be erased using any of several methods. For example, a value containing no information, such as the number 0, written at the one or more memory locations where encryption key K_{d} was located. As another example, a value containing information that is unrelated to encryption key K_{d} is written in the location where encryption key K_{d} was located. Since encryption key K_{d} is in the unsecured system 126, which is not secure, for only a short while, it is difficult for an intruder to copy encryption key K_{d}. Other embodiments may not include all of the above steps and/or may include other steps in addition to or instead of those listed in method 1000. Additionally the steps listed in method 1000 may not be distinct steps.

Any of the various embodiments described above may be used separately or in any combination together with one another. The various features of each of the embodiments may be interchanged with one another to get new embodiments.

Although the invention has been described with reference to specific embodiments, it will be understood by those skilled in the art that various changes may be made and equivalents may be substituted for elements thereof. In addition, modifications may be made without departing from the essential teachings of the invention.

## Claims

1. A machine-implemented method, implemented at a secure module (102, 402, 600, 700),
the secure module (102) being part of a self-contained device that is plugged into a host computer (126, 404) and is for acquiring user data and the secure module including a secure area (106), the secure area (106) comprising access key circuitry having a memory (110), the memory (110) including access keys (122) and instructions (112) for generating a passcode,
the method comprising:
receiving user data from a user and authenticating the user data;
sending (1002) to the host computer a request to perform a task, whereby performing the task requires an access key,
receiving a passcode (306) from the host computer;
authenticating (1006) the host computer by comparing the passcode (306) received to a passcode generated by instructions (112) for generating the passcode;
if the host computer is authenticated, then retrieving the access key from the memory (110) and sending the access key to the host computer (126), and, optionally, generating a new passcode and
sending the new passcode to the host computer (126); wherein, if the method does not comprise generating and sending a new passcode to the host computer (126), the host computer (126) is adapted to generate a new passcode from the access key; and
wherein the new passcode is not stored on the secure module (102, 402, 600, 700) after the sending of the new passcode (306) to the host computer (126).

2. The method of claim 1, further comprising generating a passcode by applying a one-way function to the access key (122).

3. The method of claim 1 or 2, further comprising generating a passcode based on fingerprints.

4. The method of claim 1, 2, or 3, the access key (122) being an encryption key (122), the method further comprising:
dividing the user data into multiple parts;
applying a one-way function to each of the multiple parts forming output of a fixed bit size;
applying an exclusive-or between multiple pairs of outputs to form m-bit keys; and
concatenating multiple m-bit keys to form the encryption key..

5. The method of claim 1, further comprising:
setting up the secure device by
acquiring (904) user data (120),
generating an access key (122) by applying a one-way hash function to the user data,
generating a passcode by applying a one-way hash function to the access key,
storing the access key and the user data in the memory (110) and sending the passcode to the host computer;

6. The method of claim 1, further comprising:
at the module (102, 402, 600, 700), extracting user information (120) from the user data, and
at the module (102, 402, 600, 700), storing the user information (120).

7. The method of claim 1, further comprising:
applying a one-way method to the user information (120), therein generating the access key (122).

8. The machine-implemented method of claim 1, the access key (122) being an encryption key (122), and the method further comprising:
extracting user information (120) from the user data;
storing the user information (120) ;
applying a one-way method to the user information (120), therein generating an encryption key (122); and
storing the encryption key (122) on the module (102, 402, 600, 700).

9. A machine-implemented method, implemented by a host computer (128),
the host computer (126) being connected to a plugged-in secure module (102), the memory (206) including a passcode (306) and instructions (304) for performing a task that requires an access key (122),
the method comprising:
receiving from the secure module (102), a request to perform the task (128, 304) at a host computer (126);
in response to the request, sending the passcode (306) to the secure module (102);
receiving from the secure module (102) an access key (122) and optionally a new passcode;
if no new passcode is received, generating a new passcode based on the received access key (122), and
storing the new passcode;
wherein the secure module (102) is adapted to send the request in response to a user entering user data and the user data being authenticated, and
wherein, if the secure module (102) is adapted to generate and send the new passcode, it is adapted to not store the new passcode after sending the new passcode to the host computer (126) and the secure module (102) is adapted to verify the received passcode by comparing the received passcode to a passcode generated by instructions for generating a passcode.

10. The machine-implemented method of claim 9, the request to perform the task (128, 304) being a request to execute one or more encryption instructions (128, 304), the method further comprising:
generating a new passcode (306) based on the access key (122);
the instructions (128, 304) to perform a task, generate a passcode based on the access keys (122);
wherein the performing of the task including at least executing the one or more encryption instructions (128, 304) based on the access key (122); the encryption instructions (128, 304) are executed by the host computer (126); and
at the host computer (126), storing the new passcode (306).

11. A secure module (102, 402, 600, 700) that is part of a self-contained device that can be plugged into a host computer (126) comprising:
an acquisition mechanism (104) for acquiring user data,
a secure area (106), including at least
a memory (110), the memory (110) including
instructions (112) for generating access keys; and
instructions for generating passcodes (123)
the secure module (102, 402, 600, 700) being adapted to perform the method according to claim 1.

12. The secure module of claim 11, wherein the secure module (102, 402, 600, 700) does not have an operating system.

13. The secure module of claim 11 or 12, wherein the secure area (106) uses embedded software for generating the access key (122).

14. The secure module of one of claims 11 to 13 further comprising:
an acquisition mechanism (104, 502, 604, 706) for acquiring user data; and
an interface for sending the encryption keys (122) to and receiving passcodes (306) from another system (126);
the circuitry (106) also including a memory (110) storing instructions for
acquiring the user data,
storing user information (120) that is based on the user data, acquired during set up, and
comparing the user information (120) with user data acquired while requesting access.

## Patentansprüche

1. Ein maschinenimplementiertes Verfahren, das in einem sicheren Modul (102, 402, 600, 700) implementiert ist,
wobei das sichere Modul (102) Teil eines eigenständigen Geräts ist, das in einen Host-Computer (126, 404) eingesteckt ist und zum Erfassen von Benutzerdaten dient und das sichere Modul (102) einen sicheren Bereich (106) enthält, wobei der sichere Bereich (106) eine Zugangsschlüsselschaltung mit einem Speicher (110) umfasst, wobei der Speicher (110) Zugangsschlüssel (122) und Anweisungen (112) zum Erzeugen eines Passcodes enthält,
wobei das Verfahren Folgendes umfasst:
Empfangen von Benutzerdaten von einem Benutzer und Authentifizieren der Benutzerdaten;
Senden (1002) einer Anforderung zum Ausführen einer Aufgabe an den Host-Computer, wobei das Ausführen der Aufgabe einen Zugangsschlüssel erfordert,
Empfangen eines Passcodes (306) vom Host-Computer;
Authentifizieren (1006) des Host-Computers durch Vergleichen des empfangenen Passcodes (306) mit einem Passcode, der durch Anweisungen (112) zum Erzeugen des Passcodes erzeugt wurde;
wenn der Host-Computer authentifiziert ist, dann Abrufen des Zugangsschlüssels aus dem Speicher (110) und Senden des Zugangsschlüssels an den Host-Computer (126) und optional Erzeugen eines neuen Passcodes; und
Senden des neuen Passcodes an den Host-Computer (126); wobei, wenn das Verfahren nicht das Erzeugen und Senden eines neuen Passcodes an den Hostcomputer (126) umfasst, der Hostcomputer (126) angepasst ist, um einen neuen Passcode aus dem Zugangsschlüssel zu erzeugen; und
wobei der neue Passcode nach dem Senden des neuen Passcodes (306) an den Host-Computer (126) nicht auf dem sicheren Modul (102, 402, 600, 700) gespeichert wird.

2. Das Verfahren gemäß Anspruch 1, ferner umfassend das Erzeugen eines Passcodes durch Anwenden einer Einwegfunktion auf den Zugangsschlüssel (122).

3. Das Verfahren gemäß Anspruch 1 oder 2, ferner umfassend das Erzeugen eines Passcodes basierend auf Fingerabdrücken.

4. Das Verfahren gemäß Anspruch 1, 2 oder 3, wobei der Zugangsschlüssel (122) ein Verschlüsselungsschlüssel (122) ist, wobei das Verfahren ferner umfasst:
Teilen der Benutzerdaten in mehrere Teile;
Anwenden einer Einwegfunktion auf jeden der mehreren Teile, die eine Ausgabe einer festen Bitgröße bilden;
Anwenden eines Exklusiv-Oder zwischen mehreren Ausgangspaaren, um m-Bit-Schlüssel zu bilden; und
Verketten mehrerer m-Bit-Schlüssel, um den Verschlüsselungsschlüssel zu bilden.

5. Das Verfahren gemäß Anspruch 1, ferner umfassend:
Einrichten des sicheren Geräts durch
Erfassen (904) von Benutzerdaten (120),
Erzeugen eines Zugangsschlüssels (122) durch Anwenden einer Einweg-Hash-Funktion auf die Benutzerdaten,
Erzeugen eines Passcodes durch Anwenden einer Einweg-Hash-Funktion auf den Zugangsschlüssel,
Speichern des Zugangsschlüssels und der Benutzerdaten in dem Speicher (110) und Senden des Passcodes an den Host-Computer.

6. Das Verfahren gemäß Anspruch 1, ferner umfassend:
im Modul (102, 402, 600, 700) Extrahieren von Benutzerinformationen (120) aus den Benutzerdaten und
Speichern der Benutzerinformation (120) in dem Modul (102, 402, 600, 700).

7. Das Verfahren gemäß Anspruch 1, ferner umfassend:
Anwenden eines Einwegverfahrens auf die Benutzerinformation (120), wobei der Zugangsschlüssel (122) erzeugt wird.

8. Das maschinenimplementierte Verfahren gemäß Anspruch 1, wobei der Zugangschlüssel (122) ein Verschlüsselungsschlüssel (122) ist und das Verfahren ferner umfasst:
Extrahieren von Benutzerinformation (120) aus den Benutzerdaten;
Speichern der Benutzerinformation (120);
Anwenden eines Einwegverfahrens auf die Benutzerinformation (120), wobei ein Verschlüsselungsschlüssel (122) erzeugt wird; und
Speichern des Verschlüsselungsschlüssels (122) im sicheren Modul (102, 402, 600, 700).

9. Ein maschinenimplementiertes Verfahren, das von einem Host-Computer (128) implementiert wird,
wobei der Host-Computer (126) mit einem eingesteckten sicheren Modul (102) verbunden ist, wobei der Speicher (206) einen Passcode (306) und Anweisungen (304) zum Ausführen einer Aufgabe enthält, die einen Zugangsschlüssel (122) erfordert,
wobei das Verfahren Folgendes umfasst:
von dem sicheren Modul (102) Empfangen einer Anforderung zum Ausführen der Aufgabe (128, 304) an einem Host-Computer (126);
als Antwort auf die Anforderung hin Senden eines gespeicherten Passcodes (306) an das sichere Modul (102);
Empfangen eines Zugangsschlüssels (122) und optional eines neuen Passcodes von dem sicheren Modul (102);
wenn kein neuer Passcode empfangen wird, Erzeugen eines neuen Passcodes, basierend auf dem empfangenen Zugangsschlüssel (122), und
Speichern des neuen Passcodes;
wobei das sichere Modul (102) angepasst ist, um die Anfrage als Antwort auf einen Benutzer zu senden, der Benutzerdaten eingibt und die Benutzerdaten authentifiziert werden, und
wobei, falls das sichere Modul (102) angepasst ist, den neuen Passcode zu erzeugen und zu senden, es angepasst ist, den neuen Passcode nach dem Senden des neuen Passcodes an den Host-Computer (126) nicht zu speichern, und das sichere Modul (102) angepasst ist, den empfangenen Passcode durch Vergleichen des empfangenen Passcodes mit einem durch Befehle zum Erzeugen eines Passcodes erzeugten Passcode zu verifizieren.

10. Das maschinenimplementierte Verfahren gemäß Anspruch 9, wobei die Anforderung zum Ausführen der Aufgabe (128, 304) eine Anforderung zum Ausführen einer oder mehrerer Verschlüsselungsanweisungen (128, 304) ist, wobei das Verfahren ferner Folgendes umfasst:
Erzeugen eines neuen Passcodes (306) basierend auf dem Zugangsschlüssel (122);
Erzeugen eines Passcodes basierend auf den Zugangsschlüsseln (122) durch die Anweisungen (128, 304) eine Aufgabe auszuführen
wobei das Ausführen der Aufgabe zumindest das Ausführen der einen oder mehreren Verschlüsselungsanweisungen (128, 304) basierend auf dem Zugangsschlüssel (122) umfasst; wobei die Verschlüsselungsanweisungen (128, 304) vom Host-Computer (126) ausgeführt werden; und
Speichern des neuen Passcodes (306) am Host-Computer (126).

11. Ein sicheres Modul (102, 402, 600, 700), das Teil eines eigenständigen Geräts ist, das in einen Host-Computer (126) eingesteckt werden kann, umfassend:
einen Erfassungsmechanismus (104) zum Erfassen von Benutzerdaten,
einen sicheren Bereich (106), der zumindest Folgendes umfasst:
einen Speicher (110), wobei der Speicher (110) Folgendes enthält:
Anweisungen (112) zum Erzeugen von Zugangsschlüsseln; und
Anweisungen zum Erzeugen von Passcodes (123),
wobei das sichere Modul (102, 402, 600, 700) angepasst ist, um das Verfahren gemäß Anspruch 1 durchzuführen.

12. Sicheres Modul gemäß Anspruch 11, wobei das sichere Modul (102, 402, 600, 700) kein Betriebssystem aufweist.

13. Sicheres Modul gemäß Anspruch 11 oder 12, wobei der sichere Bereich (106) eingebettete Software zum Erzeugen des Zugangsschlüssels (122) verwendet.

14. Sicheres Modul gemäß einem der Ansprüche 11 bis 13, ferner umfassend:
einen Erfassungsmechanismus (104, 502, 604, 706) zum Erfassen von Benutzerdaten;
eine Schnittstelle zum Senden der Verschlüsselungsschlüssel (122) an ein anderes System (126) und Empfangen von Passcodes (306) von dem anderen System (126); und
Schaltung (106), die auch einen Speicher (110), der Anweisungen zum
Erfassen der Benutzerdaten;
Speichern von Benutzerinformationen (120), die auf den Benutzerdaten basieren, die während der Einrichtung erfasst wurden, und
Vergleichen der Benutzerinformationen (120) mit Benutzerdaten, die während der Anforderung des Zugriffs erfasst wurden,
enthält.

## Revendications

1. Procédé implémenté par machine, ladite implémentation étant réalisée au niveau d'un module sécurisé (102, 402, 600, 700) ;
le module sécurisé (102) faisant partie d'un dispositif indépendant qui est branché dans un ordinateur hôte (126, 404) et permet d'acquérir des données d'utilisateur et le module sécurisé comprenant une zone sécurisée (106), la zone sécurisée (106) comprenant un circuit de clé d'accès ayant une mémoire (110), la mémoire (110) comprenant les clés d'accès (122) et les instructions (112) pour générer un mot de passe,
le procédé comprenant :
la réception de données d'utilisateur provenant d'un utilisateur et l'authentification des données d'utilisateur ;
l'envoi (1002) à l'ordinateur hôte d'une demande d'effectuer une tâche, la réalisation de la tâche nécessitant une clé d'accès ;
la réception d'un mot de passe (306) provenant de l'ordinateur hôte ;
l'authentification (1006) de l'ordinateur hôte en comparant le mot de passe (306) reçu au mot de passe généré par instructions (112) pour générer le mot de passe ;
si l'ordinateur hôte est authentifié, la récupération de la clé d'accès dans la mémoire (110) et l'envoi de la clé d'accès à l'ordinateur hôte (126), et en option, la génération d'un nouveau mot de passe ; et
l'envoi du nouveau mot de passe à l'ordinateur hôte (126); dans lequel si le procédé ne comprend pas la génération et l'envoi d'un nouveau mot de passe à l'ordinateur hôte (126), l'ordinateur hôte (126) est conçu pour générer un nouveau mot de passe à partir de la clé d'accès ; et
dans lequel le nouveau mot de passe n'est pas mémorisé sur le module sécurisé (102, 402, 600, 700) après l'envoi du nouveau mot de passe (306) à l'ordinateur hôte (126).

2. Procédé selon la revendication 1, comprenant en outre la génération d'un mot de passe par application d'une fonction unidirectionnelle à la clé d'accès (122).

3. Procédé selon la revendication 1 ou 2, comprenant en outre la génération d'un mot de passe sur la base d'empreintes digitales.

4. Procédé selon la revendication 1, 2, ou 3, la clé d'accès (122) étant une clé de cryptage (122), le procédé comprenant en outre :
la division des données d'utilisateur en de multiples parties ;
l'application d'une fonction unidirectionnelle à chacune des multiples parties formant le signal d'une taille de bit fixe ;
l'application d'une paire OU EXCLUSIF entre de multiples paires de signaux pour former des clés à m bits ; et
la concaténation de multiples clés à m bits pour former la clé de cryptage.

5. Procédé selon la revendication 1, comprenant en outre :
le paramétrage du dispositif sécurisé par
acquisition (904) des données d'utilisateur (120) ;
la génération d'une clé d'accès (122) par application d'une fonction de hachage unidirectionnelle aux données d'utilisateur ;
la génération d'un mot de passe par application d'une fonction de hachage unidirectionnelle à la clé d'accès ;
la mémorisation de la clé d'accès et des données d'utilisateur dans la mémoire (110) et l'envoi du mot de passe à l'ordinateur hôte.

6. Procédé selon la revendication 1, comprenant en outre :
au niveau du module (102, 402, 600, 700), l'extraction des informations d'utilisateur (120) à partir des données d'utilisateur ; et
au niveau du module (102, 402, 600, 700), la mémorisation des informations d'utilisateur (120).

7. Procédé selon la revendication 1, comprenant en outre :
l'application d'un procédé unidirectionnel aux informations d'utilisateur (120), par génération de la clé d'accès (122).

8. Procédé implémenté par machine selon la revendication 1, la clé d'accès (122) étant une clé de cryptage (122) et le procédé comprenant en outre :
l'extraction des informations d'utilisateur (120) à partir des données d'utilisateur ;
la mémorisation des informations d'utilisateur (120) ;
l'application d'un procédé unidirectionnel aux informations d'utilisateur (120), par génération d'une clé de cryptage (122) ; et
la mémorisation de la clé de cryptage (122) sur le module sécurisé (102, 402, 600, 700).

9. Procédé implémenté par machine, ladite implémentation étant réalisée par un ordinateur hôte (128),
l'ordinateur hôte (126) étant relié à un module sécurisé (102) branché, la mémoire (206) comprenant un mot de passe (306) et des instructions (304) pour effectuer une tâche nécessitant une clé d'accès (122) ;
le procédé comprenant :
la réception depuis le module sécurisé (102) d'une demande de réalisation de la tâche (128, 304) au niveau d'un ordinateur hôte (126) ;
en réponse à la demande, l'envoi du mot de passe (306) au module sécurisé (102);
la réception depuis le module sécurisé (102) d'une clé d'accès (122) et en option d'un nouveau mot de passe ;
si aucun nouveau mot de passe n'est reçu, la génération d'un nouveau mot de passe basé sur la clé d'accès (122) reçue ; et
la mémorisation du nouveau mot de passe ;
dans lequel le module sécurisé (102) est conçu pour envoyer la demande en réponse à un utilisateur entrant des données d'utilisateur et les données d'utilisateur étant authentifiées ; et
dans lequel si le module sécurisé (102) est conçu pour générer et envoyer le nouveau mot de passe, il est conçu pour ne pas mémoriser le nouveau mot de passe après l'envoi du nouveau mot de passe à l'ordinateur hôte (126) et le module sécurisé est conçu pour vérifier le mot de passe reçu en comparant le mot de passe reçu au mot de passe généré par des instructions générées de mot de passe pour générer un mot de passe.

10. Procédé implémenté par machine selon la revendication 9, la demande d'effectuer la tâche (128, 304) étant une demande d'exécuter une ou plusieurs instructions de cryptage (128, 304), le procédé comprenant en outre :
la génération d'un nouveau mot de passe (306) sur la base de la clé d'accès (122) ;
les instructions (128, 304) pour effectuer une tâche, générer un mot de passe sur la base des clés d'accès (122) ;
dans lequel la réalisation de la tâche comprend au moins l'exécution de la ou des instructions de cryptage (128, 304) sur la base de la clé d'accès (122) ; dans lequel les instructions de cryptage (128, 304) sont exécutées par l'ordinateur hôte (126) ; et
au niveau de l'ordinateur hôte (126), la mémorisation du nouveau mot de passe (306).

11. Module sécurisé (102, 402, 600, 700) faisant partie d'un dispositif indépendant qui peut être branché dans un ordinateur hôte (126) comprenant :
un mécanisme d'acquisition (104) pour acquérir des données d'utilisateur ;
une zone sécurisée (106), comprenant au moins :
une mémoire (110), la mémoire (110) comprenant :
des instructions (112) pour générer des clés d'accès ; et
des instructions pour générer des mots de passe (123) ;
le module sécurisé (102, 402, 600, 700) étant conçu pour mettre en œuvre le procédé selon la revendication 1.

12. Module sécurisé selon la revendication 11, dans lequel le module sécurisé (102, 402, 600, 700) n'a pas de système d'exploitation.

13. Module sécurisé selon la revendication 11 ou 12, dans lequel la zone sécurisée (106) utilise un logiciel intégré pour générer la clé d'accès (122).

14. Module sécurisé selon l'une quelconque des revendications 11 à 13, comprenant en outre :
un mécanisme d'acquisition (104, 502, 604, 706) pour acquérir des données d'utilisateur;
une interface pour envoyer les clés de cryptage (122) à un autre système (126) et pour recevoir les mots de passe (306) provenant dudit autre système ; et
le circuit (106) comprenant également une mémoire (110) pour mémoriser les instructions
d'acquisition des données d'utilisateur ;
pour mémoriser les informations d'utilisateur (120) qui sont basées sur les données d'utilisateur acquises pendant le paramétrage; et
pour comparer les informations d'utilisateur (120) aux données d'utilisateur acquises pendant la demande d'accès.
